# EUROPÄISCHE PATENTSCHRIFT

(11) **EP 3 149 748 B1**
(45) Veröffentlichungstag und Bekanntmachung des Hinweises auf die Patenterteilung: **19.02.2020**
(21) Anmeldenummer: 15723946.8
(22) Anmeldetag: 20.05.2015
(51) Int. Cl.: H01C 7/04, H02H 9/02, H01C 1/14

(54) **SYSTEM UMFASSEND EIN NTC-BAULEMENT UND EINE ELEKTRISCH DAZU IN REIHE GESCHALTETE VERBRAUCHEREINRICHTUNG**
SYSTEM COMPRISING NTC COMPONENT AND LOAD ELECTRICALLY CONNECTED IN SERIES
SYSTEME COMPRENANT ÉLÉMENT CTN ET CONSOMMATEUR ÉLECTRIQUE CONNECTÉS EN SÉRIE

(30) Priorität: 27.05.2014 DE 102014107450
(43) Veröffentlichungstag der Anmeldung: 05.04.2017
(73) Patentinhaber: TDK Electronics AG, 81671 München (DE)
(72) Erfinder: RINNER, Franz, A-8530 Deutschlandsberg (AT); AUER, Christoph, A-8043 Graz (AT); SCHWEINZGER, Manfred, A-8541 Schwanberg (AT)
(74) Vertreter: Epping - Hermann - Fischer
(86) Internationale Anmeldenummer: PCT/EP2015/061084
(87) Internationale Veröffentlichungsnummer: WO 2015/181014

(56) Entgegenhaltungen:
- EP-B1- 1 277 215
- DE-A1-102010 044 856
- "NTC thermistors for inrush current limiting", , 11. Mai 2006 (2006-05-11), XP055202189, Gefunden im Internet: URL:http://www.sos.sk/a_info/resource/a/pd f/ntc.pdf [gefunden am 2015-07-14]

## Beschreibung

Die vorliegende Erfindung betrifft ein System wie in den Ansprüchen 1 und 2 angegeben.

Aus der EP 1 277 215 B1 sind elektrische Bauelemente bekannt, mit einem Grundkörper, der einen Schichtstapel aus einander überlappenden Elektrodenschichten aufweist. Jeweils zwei benachbarte Elektrodenschichten sind durch eine elektrisch leitende Keramikschicht voneinander getrennt, wobei die elektrisch leitenden Keramikschichten aus einem Keramikmaterial bestehen, dessen spezifischer elektrischer Widerstand einen negativen Temperaturkoeffizienten aufweist.

Aus der DE 102010044856 A1 sind Widerstandsbauelemente, insbesondere NTC-Thermistore, mit einem Schichtaufbau bekannt.

Eine zu lösende Aufgabe ist es, verbesserte Systeme anzugeben, welche insbesondere für spezifische Anwendungen ausgestaltet oder optimiert ist.

Diese Aufgabe wird durch die in den Ansprüchen 1 und 2 angegebenen Systeme gelöst. Vorteilhafte Ausgestaltungen und Weiterbildungen sind Gegenstand der abhängigen Patentansprüche.

Ein vorgeschlagenes elektronisches Bauelement umfasst eine Vielzahl von übereinander zu einem Stapel angeordneten Funktionsschichten, ersten Innenelektroden und zweiten Innenelektroden, wobei jede der ersten und zweiten Innenelektroden zwischen zwei benachbarten Funktionsschichten angeordnet ist. Zweckmäßigerweise umfasst das elektronische Bauelement dementsprechend eine Vielzahl von ersten Innenelektroden und eine Vielzahl von zweiten Innenelektroden.

Das elektronische Bauelement ist ein Vielschichtbauelement. Die Funktionsschichten sind elektrisch aktive, heißleitende Schichten beziehungsweise Schichten mit einem negativen Temperaturkoeffizienten. Zweckmäßigerweise handelt es sich bei den Funktionsschichten um keramische Schichten, beispielsweise aus Metalloxiden oder diese umfassend.

Die ersten Innenelektroden sind, vorzugsweise jeweils unmittelbar, mit einem ersten Außenkontakt des elektronischen Bauelements elektrisch leitfähig verbunden. Weiterhin sind die zweiten Innenelektroden, vorzugsweise jeweils unmittelbar, mit einem zweiten Außenkontakt des elektronischen Bauelements elektrisch leitfähig verbunden. Der zweite Außenkontakt ist zweckmäßigerweise von dem ersten Außenkontakt verschieden und beispielsweise auf einer dem ersten Außenkontakt gegenüberliegenden Seite des elektronischen Bauelements angeordnet. Bei dem ersten und dem zweiten Außenkontakt kann es sich jeweils um eine Außenelektrode des elektronischen Bauelements handeln. Zweckmäßigerweise sind die ersten Innenelektroden ausschließlich mit dem ersten Außenkontakt und die zweiten Innenelektroden ausschließlich mit dem zweiten Außenkontakt elektrisch leitfähig verbunden.

Die Funktionsschichten sind weiterhin so gewählt, dass der erste und der zweite Außenkontakt des elektronischen Bauelements sowohl in einem Grundzustand des elektronischen Bauelements als auch in einem heißen Zustand des elektronischen Bauelements, das heißt bei einer Temperatur, welche größer ist als diejenige des elektronischen Bauelements in dem Grundzustand, über die Funktionsschichten elektrisch leitfähig miteinander verbunden sind.

Die Funktionsschichten und/oder Innenelektroden sind vorzugsweise äquidistant im Stapel angeordnet.

Bei dem Grundzustand kann es sich um einen unbelasteten Zustand, wobei beispielsweise keine elektrische Leistung an das elektronische Bauelement angelegt ist, handeln. Besonders bevorzugt beschreibt der Grundzustand den Zustand des elektronischen Bauelements bei Raumtemperatur oder insbesondere bei 25°C. Auch kann der Grundzustand Standardtemperatur- sowie Standarddruckbedingungen beschreiben.

Dagegen kann der heiße Zustand einen belasteten Zustand, beispielsweise mit einer am Bauelement und/oder an den Außenkontakten anliegenden elektrischen Spannung oder mit einem anliegenden elektrischen Strom bedeuten.

Alternativ oder zusätzlich kann der Temperaturbereich zwischen dem Grundzustand und dem heißen Zustand beispielsweise jeden Temperaturbereich zwischen -55°C und +180°C überspannen oder sich über diesen Bereich erstrecken. Bevorzugt kann sich der Temperaturbereich zwischen dem Grundzustand und dem heißen Zustand über den Bereich von - 40°C bis +150°C erstrecken.

Weiterhin ist das elektronische Bauelement ein NTC-Bauelement, das heißt ein heißleitendes Bauelement mit einem negativen Temperaturkoeffizienten. Der heiße Zustand des elektronischen Bauelements beschreibt in diesem Sinne vorzugsweise einen beispielsweise durch eine anliegende elektrische Leistung erwärmten Zustand des elektronischen Bauelements. Bei dem heißen Zustand handelt es sich vorzugsweise weiterhin um einen stationären Temperaturzustand des Bauelements.

Durch die elektrisch leitfähige Verbindung zwischen dem ersten Außenkontakt und dem zweiten Außenkontakt, insbesondere in dem Grundzustand des elektronischen Bauelements kann mit Vorteil, beispielsweise gegenüber herkömmlichen NTC-Bauelementen, welche in einem Grundzustand bei 25°C einen Nennwiderstand im Ω- oder kQ-Bereich aufweisen, erreicht werden, dass ein Einschaltstrom eines elektrischen Verbrauchers, welcher beispielsweise in einer entsprechenden Anwendung in Reihe zu dem elektronischen Bauelement geschaltet ist, soweit begrenzt wird, dass beispielsweise die elektrische Spannung beim Einschaltvorgang für die elektrische Versorgung weiterer wichtiger elektrischer Komponenten noch ausreichend hoch ist.

Dies kann beispielsweise bei der Anwendung des elektronischen Bauelements im automobilen Sektor, insbesondere beim Einsatz als Einschaltstrombegrenzer für elektrische Anlassermotoren bei Kraftfahrzeugen ("Start-Stopp-Systemen") vorteilhaft und/oder erforderlich sein. Wenn beispielsweise der Einschaltstrom nicht ausreichend oder angemessen begrenzt wird, so kann eine Bordnetzspannung soweit absinken, dass auch weitere sicherheitsrelevante Anwendungen wie ABS und ESP nicht mehr mit der vorgesehenen elektrischen Spannung versorgt werden können. In diesem Sinne trägt das elektronische Bauelement gemäß der vorliegenden Darstellung unmittelbar zu Sicherheitsaspekten und/oder oder zur Energieeffizienz im Straßenverkehr bei.

NTC-Bauelemente sind im Allgemeinen anfällig für die Entstehung von sogenannten "hotspots" (englisch für "heiße Stellen"), das heißt Bereichen, die zufällig oder konstruktionsbedingt beispielsweise während des Betriebs des jeweiligen Bauelements heißer werden als andere Bereiche. Der "hotspot" verursacht durch positive Rückkopplung eine weitere Erwärmung. Mit anderen Worten bedeutet das, dass der "hotspot" dadurch, dass der elektrische Widerstand gemäß dem heißleitenden Verhalten mit zunehmender Temperatur sinkt, eine zusätzliche Erwärmung erfährt. Dies kann unter Umständen zur Zerstörung des Bauelements führen. Durch die Vielschichtausgestaltung des elektronischen Bauelements gemäß der vorliegenden Darstellung kann ebenfalls vorteilhafterweise die Entstehung der "hotspots" verhindert oder eingeschränkt werden. Dies ist einerseits den kürzeren Wegstrecken oder Strompfaden zwischen den Elektroden geschuldet, wodurch das Risiko der Entstehung der "hotspots" eingeschränkt werden kann. Auf der anderen Seite kann, insbesondere durch das kaltleitende (PTC-) Verhalten der Innenelektroden und dadurch, dass der elektrische Strom im Betrieb des elektronischen Bauelements maßgeblich ebenfalls durch die Innenelektroden fließt, so dass der elektrische Widerstand des elektronischen Bauelements ebenfalls wesentlich durch die Innenelektroden bestimmt ist, die Entstehung von "hotspots" verhindert oder zumindest eingeschränkt werden. Mit anderen Worten kann das elektrische Verhalten der Innenelektroden die oben genannte positive Rückkopplung in den heißleitenden Funktionsschichten und die Entstehung der "hotspots" zumindest teilweise kompensieren oder verhindern.

In einer bevorzugten Ausgestaltung beträgt der spezifische elektrische Widerstand der Funktionsschichten, vorzugsweise jeder einzelnen der Funktionsschichten, im Grundzustand des elektronischen Bauelements zwischen 0,1 Qm und 0,3 Qm. Durch diese Ausgestaltung kann vorteilhafterweise die erfindungsgemäße elektrisch leitfähige Verbindung zwischen dem ersten Außenkontakt und dem zweiten Außenkontakt über die Funktionsschichten ermöglicht werden.

In einer bevorzugten Ausgestaltung beträgt die Anzahl der Funktionsschichten des elektronischen Bauelements zwischen 20 und 120. Durch diese Ausgestaltung beziehungsweise durch die Vielschichtausführung des elektronischen Bauelements im Allgemeinen kann zweckmäßigerweise der elektrische Widerstand und/oder der entsprechende Spannungsabfall zwischen zwei benachbarten gegenpoligen, dass heißt verschiedenen Innenelektroden und/oder zwischen dem ersten Außenkontakt und dem zweiten Außenkontakt vermindert werden. Weiterhin kann die elektrische Strombelastbarkeit und/oder Stromtragfähigkeit des elektrischen Bauelements durch die Vielschichtausführung vorteilhafterweise erhöht werden.

Insbesondere die elektrische Kontaktierung der Vielzahl von ersten Innenelektroden und zweiten Innenelektroden zu dem ersten beziehungsweise zweiten Außenkontakt, wobei die Innenelektroden jeweils zwischen zwei benachbarten Funktionsschichten angeordnet sind, stellt effektiv eine Parallelschaltung von einzelnen NTC-Bauelementen dar, wodurch sich der elektrische Strom bei einer Belastung des elektronischen Bauelements auf die einzelnen Innenelektroden beziehungsweise Funktionsschichten aufteilt.

In einer bevorzugten Ausgestaltung umfassen die Funktionsschichten ein dotiertes Halbleitermaterial, insbesondere ein Verbindungshaltleitermaterial, und/oder ein keramisches Material. Durch diese Ausgestaltung können die erfindungsgemäßen elektrischen Eigenschaften, beispielsweise die elektrisch leitfähige Verbindung zwischen den Außenkontakten im Grundzustand des Bauelements besonders zweckmäßig erreicht und/oder eingestellt werden.

In einer bevorzugten Ausgestaltung umfassen die Funktionsschichten ein Oxid zumindest eines der Elemente Eisen, Kobalt, Nickel, Kupfer oder Zink. Vorzugsweise enthalten die Funktionsschichten die genannten Materialien oder Oxide als Hauptbestandteile, das heißt beispielsweise mit Anteilen von mehr als 50% in Massen-, Volumen- oder Moleinheiten.

Zusätzlich zu den genannten Materialien können die Funktionsschichten weitere, chemisch stabilisierende, Oxide, welche beispielsweise eine den elektrischen Eigenschaften des elektronischen Bauelements abträgliche (weitere) Oxidation der Funktionsschichten verhindern, enthalten.

In einer Ausgestaltung haben die Funktionsschichten jeweils eine Schichtdicke zwischen 10 µm und 100 µm, besonders bevorzugt zwischen 20 µm und 40 µm.

Wenn in der vorliegenden Darstellung Bezug auf die Funktionsschichten genommen wird, sei vorzugsweise jede einzelne der genannten Funktionsschichten gemeint.

In einer bevorzugten Ausgestaltung ist jede der ersten und zweiten Innenelektroden eine Innenelektrodenschicht beispielsweise mit einer Schichtdicke zwischen 2 µm und 15 µm. Alternativ kann jede der ersten und zweiten Innenelektroden eine Innenelektrodenschicht, wie beschrieben, umfassen. Besonders bevorzugt beträgt die Schichtdicke der ersten und zweiten Innenelektroden zwischen 5 µm und 10 µm.

In einer bevorzugten Ausgestaltung sind die ersten Innenelektroden und die zweiten Innenelektroden untereinander und/oder in Bezug auf die jeweils andere Art, gleichartig ausgestaltet.

Die genannten Schichtdicken der Funktionsschichten als auch diejenigen der Innenelektroden sind insbesondere in Bezug auf die elektrischen Eigenschaften des elektronischen Bauelements sowie hinsichtlich der Herstellung des Bauelements oder der Abscheidung der Innenelektroden beispielsweise mittels Siebdruckverfahren, zweckmäßig.

Der elektrische Nennwiderstand des elektronischen Bauelements beträgt zwischen 10 mΩ und 25 mΩ.

Der elektrische Nennwiderstand beschreibt vorzugsweise den elektrischen Widerstand des unbelasteten elektronischen Bauelements zwischen den Außenkontakten bei einer Umgebungstemperatur von 25°C.

In einer bevorzugten Ausgestaltung sind die ersten und zweiten Innenelektroden in Stapelrichtung gesehen alternierend übereinander angeordnet. Durch diese Ausgestaltung kann besonders zweckmäßig ein elektrisch aktiver Bereich, beispielsweise in einem Überlappbereich zwischen den ersten Innenelektroden einerseits und den zweiten Innenelektroden andererseits, ausgebildet werden.

In einer bevorzugten Ausgestaltung überlappen die ersten Innenelektroden dementsprechend mit den zweiten Innenelektroden.

In einer bevorzugten Ausgestaltung sind die ersten und die zweiten Innenelektroden jeweils unmittelbar elektrisch leitfähig mit dem ersten beziehungsweise dem zweiten Außenkontakt verbunden.

Bei dem dargestellten elektronischen Bauelement ist es insbesondere für die elektrisch leitfähige Verbindung der Außenkontakte über die Funktionsschichten von Vorteil, den Innen- oder Serienwiderstand der Innenelektroden besonders gering zu halten. Die kann durch, beispielsweise im Verhältnis zu den Funktionsschichten, dickeren Innenelektroden erreicht werden. Eine Verminderung der Dicke der Funktionsschichten, beispielsweise bei gleichbleibender Schichtdicke der Innenelektroden, ist hingegen technologisch, beispielsweise mit entsprechenden Siebdruckverfahren nicht ohne weiteres oder nur schwer realisierbar.

In einer bevorzugten Ausgestaltung weist das elektronische Bauelement weitere, freie Elektroden auf, welche elektrisch nur über die Funktionsschichten, das heißt mittelbar, mit den ersten und zweiten Innenelektroden verbunden sind. Die freien Elektroden stellen vorzugsweise ebenfalls Innenelektroden des elektronischen Bauelements dar. Gemäß dieser Ausgestaltung überlappt vorzugsweise jede der freien Elektroden in Aufsicht auf das elektronische Bauelement betrachtet zumindest teilweise mit den ersten und zweiten Innenelektroden. Demnach kann gemäß dieser Ausgestaltung weiterhin vorteilhafterweise eine innere oder interne Serienschaltung oder Vielschichtserienschaltung des elektronischen Bauelements ausgebildet werden. Ein spezieller Vorteil dieser Serienschaltung betrifft die mögliche Ausgestaltung eines besonders geringen Serienwiderstands der Innenelektroden und/oder die Möglichkeit, die Wärmekapazität der Funktionsschichten beziehungsweise des elektronischen Bauelements an weitere Parameter anzupassen und/oder zu vergrößern. Dies kann insbesondere durch die verminderten Schichtdicken und/oder durch die, beispielsweise im Verhältnis zu den Funktionsschichten, verminderten Dicken der Innenelektroden erzielt werden.

In einer bevorzugten Ausgestaltung sind die freien Innenelektroden übereinander gestapelt angeordnet. Diese Ausgestaltung ermöglicht ebenfalls zweckmäßigerweise die Ausgestaltung mit der oben genannten Vielschichtserienschaltung.

In einer bevorzugten Ausgestaltung sind die ersten und zweiten Innenelektroden, in Aufsicht auf das elektronische Bauelement betrachtet, beabstandet. Mit anderen Worten sind die ersten und zweiten Innenelektroden, beispielsweise in Aufsicht auf das elektronische Bauelement betrachtet, überlappfrei. Die überlappfreie Ausgestaltung der ersten und zweiten Innenelektroden ist weiterhin insbesondere für die Ausgestaltung der Vielschichtserienschaltung zweckmäßig.

In einer bevorzugten Ausgestaltung ist das elektronische Bauelement gemäß einer mehrfachen internen Serienschaltung ausgebildet. Gemäß dieser Ausgestaltung sind die weiteren Elektroden vorzugsweise ebenfalls übereinander, jedoch in mehreren elektrisch nur mittelbar über die Funktionsschichten miteinander verbundenen Teilstapeln ausgestaltet. Gemäß dieser Ausgestaltung kann der Serienwiderstand der Innenelektroden vorzugsweise weiter reduziert werden.

Ein weiterer Aspekt der vorliegenden Anmeldung betrifft eine Anordnung umfassend eine Parallelschaltung von mehreren elektronischen Bauelementen wie oben beschrieben. Gemäß dieser Ausgestaltung sind also mehrere elektronische Bauelemente, die jeweils als Vielschichtbauelement ausgebildet sind, parallel geschaltet. Durch diese Ausgestaltung kann die elektrische Strombelastbarkeit oder Stromtragfähigkeit der Anordnung gegenüber einem einzelnen elektronischen Bauelement vorteilhafterweise weiter erhöht werden. Bei der Anordnung handelt es sich entsprechend um eine NTC-Anordnung.

Die vorliegende Erfindung betrifft Systeme, wie in den Ansprüchen 1 und 2 angegeben, mit dem oben beschriebenen elektronischen Bauelement oder mit der oben beschriebenen Parallelschaltung mehrerer elektronischen Bauelemente, welche weiterhin eine elektrische Verbrauchereinrichtung umfassen. Die elektrische Verbrauchereinrichtung ist elektrisch zu dem elektronischen Bauelement oder der Anordnung in Reihe geschaltet und zusammen mit dem elektronischen Bauelement beziehungsweise der Anordnung einer Umgebungstemperatur, vorzugsweise insbesondere einer gemeinsamen, einzigen Umgebungstemperatur, ausgesetzt. Weiterhin ist das System derart ausgebildet, dass die Erwärmungszeit, das heißt die Zeit, in der der Einschaltstrom der Verbrauchereinrichtung das elektronische Bauelement beziehungsweise die Anordnung auf eine stationäre Temperatur erwärmt, und die elektrische Anlaufzeit der Verbrauchereinrichtung, die wiederum bestimmt, wann der Einschaltstrom auf den Nennstrom der Verbrauchereinrichtung abgefallen ist, in einem Verhältnis zwischen 0,5 und 1,5 zueinander stehen.

Das System kann entsprechend weiterhin eine elektrische Leistungsquelle umfassen, die zweckmäßigerweise ausgebildet ist, den genannten Einschaltstrom bereitzustellen.

Die stationäre Temperatur stellt vorzugsweise die Temperatur des oben genannten heißen Zustands des elektronischen Bauelements dar. Weiterhin beschreibt die stationäre Temperatur vorzugsweise alternativ oder zusätzlich eine Gleichgewichtstemperatur und/oder eine Betriebstemperatur des Systems. Die stationäre Temperatur beträgt vorzugsweise 120°C oder circa 120°C.

Zweckmäßigerweise erwärmt sich das elektronische Bauelement beziehungsweise die Anordnung lediglich durch Eigenerwärmung, vorzugsweise hervorgerufen durch den Einschaltstrom, auf die stationäre Temperatur, wobei eine Erwärmung durch Wärmestrahlung oder Wärmeleitung durch oder von etwaigen sonstigen Komponenten des Systems vernachlässigbar oder nicht maßgeblich ist.

Durch die Abstimmung der Erwärmungszeit auf die Anlaufzeit oder umgekehrt kann mit Vorteil, beispielsweise gegenüber der Situation, in der die Erwärmungszeit im Vergleich zu der elektrischen Anlaufzeit zu kurz bemessen ist, einer Beschädigung weiterer elektrisch mit dem System oder der Verbrauchereinrichtung wechselwirkender Komponenten, vorgebeugt werden.

Weiterhin kann durch die genannte Abstimmung mit Vorteil, beispielsweise gegenüber der Situation, in der die Erwärmungszeit im Vergleich zu der elektrischen Anlaufzeit zu lang bemessen ist, ein ordnungsgemäßer zuverlässiger Betrieb der Verbrauchereinrichtung beispielsweise im Zusammenwirken mit den oben genannten weiteren, mit dem System oder der Verbrauchereinrichtung wechselwirkenden Komponenten, erreicht werden.

Die Erwärmungszeit ist vorzugsweise oder zweckmäßigerweise gleich der oder geringfügig kürzer als die Anlaufzeit. Insgesamt ist das elektronische Bauelement, die Anordnung und/oder das System vorzugsweise derart ausgebildet, dass die Erwärmungszeit und die Anlaufzeit zumindest weitgehend gleich sind. Dazu kann beispielsweise das elektrische Anlaufverhalten der Verbrauchereinrichtung an das Erwärmungsverhalten der Funktionsschichten und/oder des elektronischen Bauelements oder der Anordnung entsprechend angepasst sein. Die Anlaufzeit beträgt vorzugsweise circa 50 ms.

Die weiteren genannten Komponenten können, wie oben angedeutet, elektrische Komponenten des Bordnetzes eines Kraftfahrzeugs, wie das ABS oder ESP-System bezeichnen.

In einer bevorzugten Ausgestaltung des Systems sind die Erwärmungszeit und die elektrische Anlaufzeit gleich.

Im Allgemeinen stehen die Erwärmungszeit und die elektrische Anlaufzeit in einem Verhältnis zwischen 0,5 und 1,5 zueinander.

Ein weiterer Aspekt der vorliegenden Offenbarung betrifft die Verwendung eines elektronischen Bauelements beziehungsweise der Anordnung für das genannte System. Bei der elektrischen Verbrauchereinrichtung kann es sich beispielsweise um einen Anlassermotor für ein Kraftfahrzeug handeln. Das elektronische Bauelement fungiert dann zweckmäßigerweise als Einschaltstrombegrenzer (in Englisch: "inrush current limiter").

Es wird weiterhin ein Verfahren zur Herstellung oder Abstimmung des Systems angegeben. Das Verfahren umfasst das Bereitstellen eines elektronischen Bauelements oder einer dieses umfassenden Anordnung, einer elektrisch dazu in Reihe geschalteten Verbrauchereinrichtung und einer an die genannten Komponenten angeschlossenen elektrischen Leistungsquelle bei einer gemeinsamen Umgebungstemperatur. Das Verfahren umfasst weiterhin das Abstimmen der Erwärmungszeit, das heißt der Zeit, in der der Einschaltstrom für die Verbrauchereinrichtung das elektronische Bauelement beziehungsweise die Anordnung auf die stationäre Temperatur erwärmt, auf die elektrische Anlaufzeit, die bestimmt, wann der Einschaltstrom auf den Nennstrom der Verbrauchereinrichtung abgefallen ist. Das Verfahren umfasst weiterhin das Fertigstellen des Systems.

In einer bevorzugten Ausgestaltung des Verfahrens wird die Erwärmungszeit auf die genannte Anlaufzeit durch die Wahl der Materialien der Funktionsschichten sowie deren Dicke und Anzahl abgestimmt. Durch diese Ausgestaltung kann die genannte Abstimmung vorteilhafterweise über die Wärmekapazität der Funktionsschichten erreicht werden.

Alternativ kann im Rahmen des Systems und/oder des Verfahrens die genannte Anlaufzeit, umgekehrt, entsprechend auf die Erwärmungszeit abgestimmt sein oder werden.

Das oben beschriebene System oder das elektronische Bauelement beziehungsweise die Anordnung ist vorzugsweise mittels des hier beschriebenen Verfahrens herstellbar oder hergestellt. Insbesondere können sich sämtliche für das Verfahren offenbarte Merkmale auch auf das oben beschriebene System oder das elektronische Bauelement beziehungsweise die Anordnung beziehen, und umgekehrt.

Weitere Vorteile, vorteilhafte Ausgestaltungen und Zweckmäßigkeiten der Erfindung ergeben sich aus der folgenden Beschreibung der Ausführungsbeispiele in Verbindung mit den Figuren.
Figur 1 zeigt eine schematische Schnittansicht eines elektronischen Bauelements.
Figur 2 zeigt eine schematische Schnittansicht des elektronischen Bauelements gemäß einer alternativen
   Anordnung.
Figur 3 zeigt eine Kennlinie eines elektronischen Bauelements gemäß Figur 2.
Figur 4 zeigt eine schematische Abbildung beziehungsweise ein Ersatzschaltbild einer Anordnung umfassend eine Mehrzahl von elektronischen Bauelementen gemäß den Figuren 2 oder 3.
Figur 5 zeigt eine schematische Ansicht eines Systems umfassend eine Anordnung gemäß Figur 4 und ein elektronisches Bauelement gemäß den Figuren 2 oder 3.
Figur 6 zeigt das Einschaltverhalten einer Verbrauchereinrichtung mit und ohne Verschaltung des elektronischen Bauelements beziehungsweise der Anordnung.

Gleiche, gleichartige und gleich wirkende Elemente sind in den Figuren mit gleichen Bezugszeichen versehen. Die Figuren und die Größenverhältnisse der in den Figuren dargestellten Elemente untereinander sind nicht als maßstäblich zu betrachten. Vielmehr können einzelne Elemente zur besseren Darstellbarkeit und/oder zum besseren Verständnis übertrieben groß dargestellt sein.

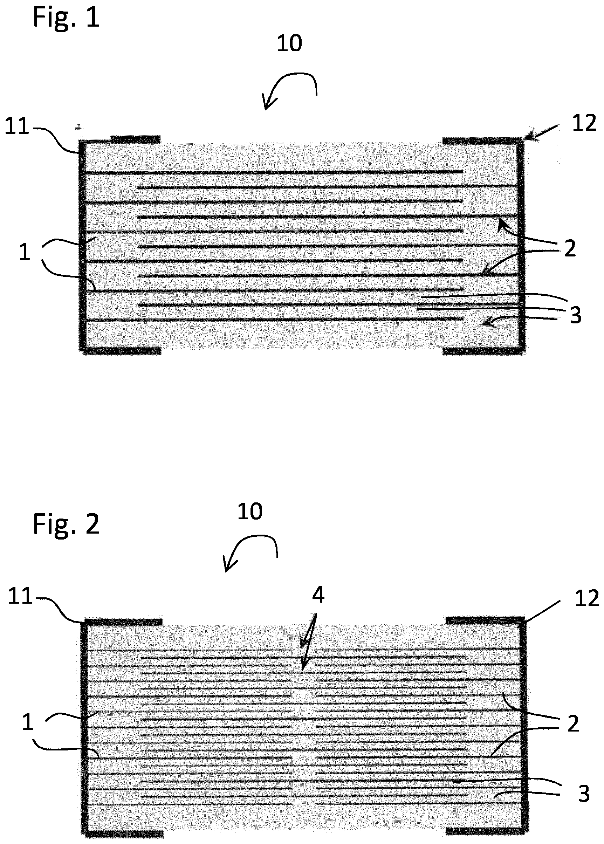

Figur 1 zeigt eine schematische Schnittansicht eines elektronischen Bauelements 10. Das elektronische Bauelement 10 ist vorzugsweise ein NTC-Bauelement, insbesondere ein Vielschichtbauelement. Das elektronische Bauelement 10 findet vorzugsweise Anwendung als Einschaltstrombegrenzer, insbesondere für elektrische Anlassermotoren in "Start-Stopp-Systemen" für Kraftfahrzeuge.

Das elektronische Bauelement umfasst eine Mehrzahl von ersten Innenelektroden 1. Weiterhin umfasst das elektronische Bauelement 10 eine Mehrzahl von zweiten Innenelektroden 2. Beispielsweise kann das elektronische Bauelement 10 gemäß der Darstellung der Figur 1 jeweils sechs erste Innenelektroden 1 und sechs zweite Innenelektroden 2 aufweisen.

Das elektronische Bauelement weist weiterhin einen ersten Außenkontakt 11 auf. Die ersten Innenelektroden sind unmittelbar elektrisch leitfähig mit dem ersten Außenkontakt 11 verbunden. Das elektronische Bauelement 10 weist weiterhin einen zweiten Außenkontakt 12 auf. Die zweiten Innenelektroden 2 sind weiterhin unmittelbar elektrisch leitfähig mit dem zweiten Außenkontakt 12 verbunden. Der erste Außenkontakt 11 ist an einer ersten Seite des elektronischen Bauelements 10 angeordnet. Der zweite Außenkontakt 12 ist weiterhin an einer der ersten Seite gegenüberliegenden, zweiten Seite (Seiten nicht explizit gekennzeichnet) des elektronischen Bauelements 10 angeordnet.

Das elektronische Bauelement 10 weist weiterhin eine Vielzahl von Funktionsschichten 3 auf. Die Funktionsschichten 3 sind übereinander zu einem Stapel angeordnet. Jede der ersten und zweiten Innenelektroden 1, 2 ist zwischen zwei benachbarten Funktionsschichten 3 angeordnet. Bei den Funktionsschichten 3 handelt es sich vorzugsweise um dotiertes Halbleitermaterial, beispielsweise Verbindungshalbleitermaterial und/oder ein keramisches Material. Insbesondere können die Funktionsschichten ein Oxid zumindest eines der Elemente Eisen, Kobalt, Nickel, Kupfer oder Zink und beispielsweise zusätzliche, chemisch stabilisierende Oxide enthalten.

Die ersten und zweiten Innenelektroden 1, 2 sind vorzugsweise gleichartig ausgebildet. Weiterhin überlappen die ersten Innenelektroden 1, beispielsweise in Aufsicht auf das elektronische Bauelement 10 betrachtet, mit den zweiten Innenelektroden 2, beispielsweise um einen elektrisch aktiven Bereich, z. B. den Überlappbereich, zu bilden.

Gemäß der Darstellung der Figur 1 sind die ersten und zweiten Innenelektroden 1, 2 in Stapelrichtung gesehen zweckmäßigerweise alternierend übereinander angeordnet.

Die ersten und zweiten Innenelektroden 1, 2 sind Innenelektrodenschichten. Die Schichtdicke der Innenelektroden beträgt vorzugsweise zwischen 2 µm und 15 µm. Die Schichtdicke der ersten und zweiten Innenelektroden beträgt gemäß der Figur 1 beispielsweise 10 µm oder weniger.

Die Schichtdicke der Funktionsschichten 3, welche vorliegend vorzugsweise ebenfalls gleichartig oder ähnlich ausgebildet sind, beträgt vorzugsweise zwischen 10 µm und 100 µm oder zwischen 10 µm und 50 µm, in Figur 1 beispielsweise 40 µm.

Die Funktionsschichten 3 sind vorzugsweise so gewählt, dass der erste und der zweite Außenkontakt 1, 2 des elektronischen Bauelements 10 sowohl in einem Grundzustand als auch in einem heißen Zustand des elektronischen Bauelements über die Funktionsschichten 3 elektrisch leitfähig miteinander verbunden sind. Der spezifische elektrische Widerstand der Funktionsschichten 3 im Grundzustand des elektronischen Bauelements 10 beträgt vorzugsweise zwischen 0,1 Ωm und 0,3 Ωm. Besonders bevorzugt beträgt der spezifische elektrische Widerstand der Funktionsschichten 0,18 Ωm.

Der B-Wert (Thermistorkonstante) der Funktionsschichten 3 beträgt vorzugsweise 2620 K.

Der Grundzustand beschreibt vorzugsweise eine Temperatur des elektronischen Bauelements von 25°C und/oder bei Raumtemperatur.

Der heiße Zustand beschreibt vorzugsweise eine Temperatur des elektronischen Bauelements, welche größer ist als die Temperatur des elektronischen Bauelements in dem Grundzustand. Bei dem heißen Zustand handelt es sich vorzugsweise um einen Betriebszustand in dem das elektronische Bauelement 10 eine Betriebstemperatur angenommen hat. Die Betriebstemperatur kann eine stationäre Temperatur, beispielsweise des belasteten elektronischen Bauelements 10, darstellen. Demgegenüber beschreibt der Grundzustand vorzugsweise einen unbelasteten Zustand des elektronischen Bauelements 10.

Der Temperaturbereich zwischen dem Grundzustand und dem heißen Zustand kann sich beispielsweise über den Temperaturbereich zwischen -55°C und +180°C erstrecken. Besonders bevorzugt erstreckt sich der Temperaturbereich zwischen dem Grundzustand und dem heißen Zustand über den Bereich von -40°C bis +150°C.

Anders als in Figur 1 dargestellt kann das elektronische Bauelement beispielsweise zwischen 20 und 120 übereinander angeordneten Funktionsschichten umfassen. Besonders bevorzugt umfasst das elektronische Bauelement beispielsweise 72 übereinander angeordnete Funktionsschichten.

Die elektrische Leitfähigkeit zwischen dem ersten Außenkontakt 11 und dem zweiten Außenkontakt 12 über die Funktionsschichten 3 wird vorteilhafterweise durch die Vielschichtausführung des elektronischen Bauelements 10 begünstigt, da beispielsweise ein Spannungsabfall zwischen einer ersten Innenelektrode 1 und einer zu dieser benachbarten zweiten Innenelektrode 2 in Betrieb des elektronischen Bauelements 10 vorteilhafterweise wesentlich kleiner ist als z. B. über die Summe sämtlicher Funktionsschichten oder - beispielsweise bei herkömmlichen, nicht in Vielschichtbauweise ausgeführtes NTC-Bauelementen - über den gesamten "Funktionskörper" gemessen.

Weiterhin kann durch die Vielschichtausführung die Strombelastbarkeit und/oder Stromtragfähigkeit des elektronischen Bauelements bis hin zu Stromstärken von einigen 100 A, beispielsweise gegenüber konventionellen NTC-Bauelementen, erhöht werden. Dies wird insbesondere durch die effektive Parallelschaltung von mehreren NTC-Teilbauelementen durch die Vielschichtbauweise ermöglicht.

Der elektrische Nennwiderstand (beispielsweise bei einer Temperatur von 25°C), des elektronischen Bauelements beträgt gemäß der vorliegenden Erfindung zwischen 10 mΩ und 25 mΩ.

Eine Länge des elektronischen Bauelements 10 kann beispielsweise 5,6 mm und eine Breite des elektronischen Bauelements kann beispielsweise 4,8 mm betragen.

Figur 2 zeigt eine schematische Schnittansicht des elektronischen Bauelements 10 gemäß einer zur Figur 1 alternativen Anordnung. Das elektronische Bauelement gemäß Figur 2 betrifft einen Schichtaufbau mit einer inneren oder internen Vielschichtserienschaltung insbesondere der Innenelektroden des elektronischen Bauelements 10. Dazu weist das elektronische Bauelement 10 im Gegensatz zur Figur 1 weitere freie Elektroden 4 auf, welche ebenfalls Innenelektroden darstellen.

Im Gegensatz zu Figur 1 sind die ersten und zweiten Innenelektroden 1, 2 nicht alternierend sondern seitlich betrachtet einander gegenüberliegend angeordnet. Weiterhin sind die freien Elektroden 4 jeweils zwischen zwei ersten und zwei zweiten Innenelektroden 1, 2 angeordnet. Die freien Elektroden 4 sind weiterhin in Stapelrichtung übereinander angeordnet. Weiterhin überlappen die freien Elektroden 4 zweckmäßigerweise zumindest teilweise jeweils mit den ersten Innenelektroden 1 und den zweiten Innenelektroden 2.

Im Gegensatz zu der Figur 1 überlappen die ersten und die zweiten Innenelektroden 1, 2 beispielsweise in Aufsicht auf das elektronische Bauelement 10 aus Figur 2 betrachtet nicht sondern sind in Aufsicht beabstandet oder überlappfrei angeordnet. Die Schichtdicke der ersten und zweiten Innenelektroden 1, 2 beträgt gemäß der Figur 2 beispielsweise 5 µm.

Die freien Elektroden 4 sind lediglich über die Funktionsschichten 3 - das heißt mittelbar - elektrisch leitfähig mit den ersten und zweiten Innenelektroden 1, 2 verbunden.

Die freien Elektroden 4 können beispielsweise vollständig in einem Grundkörper (nicht explizit gekennzeichnet) des elektronischen Bauelements 10, welcher beispielsweise die Funktionsschichten 3 und/oder die ersten und zweiten Innenelektroden 1, 2 umfasst, angeordnet sein.

Das elektronische Bauelement gemäß der Figur 2 umfasst elf übereinander angeordnete erste Innenelektroden 1 sowie elf übereinander angeordnete zweite Innenelektroden 2. Weiterhin umfasst das elektronische Bauelement gemäß Figur 2 zehn übereinander angeordnete freie Elektroden 4.

Im Gegensatz zur Figur 1, wonach das elektronische Bauelement beispielsweise zehn Funktionsschichten umfasst, umfasst das elektronische Bauelement gemäß Figur 2 20 Funktionsschichten, wobei die Dicke der Funktionsschichten gegenüber der Figur 1 halbiert ist. Weiterhin ist die Dicke der Innenelektroden gegenüber der Darstellung der Figur 1 halbiert oder verkleinert. Während der Herstellung des elektronischen Bauelements kann durch die Verminderung der Schichtdicke der einzelnen Funktionsschichten ebenfalls die Schichtdicke der einzelnen Innenelektroden (beispielsweise der ersten und zweiten Innenelektroden 1, 2) verringert werden. Dies ist im Rahmen eines Siebdruckverfahrens, welches zum Aufbringen der Innenelektroden besonders zweckmäßig ist, möglich. Dementsprechend beträgt die Schichtdicke der Funktionsschichten gemäß der Ausgestaltung in Figur 2 vorzugsweise 20 µm und die Schichtdicke der Innenelektroden beispielsweise 5 µm.

Durch die innere Vielschichtserienschaltung kann, wie oben beschrieben, ein besonders geringer Serienwiderstand der Innenelektroden erzielt und/oder die Wärmekapazität der Funktionsschichten beziehungsweise des elektronischen Bauelements angepasst und/oder vergrößert werden.

Eine Verkleinerung des Serienwiderstands, beispielsweise gegenüber der Darstellung aus Figur 1, bei vergleichbaren elektrischen Eigenschaften des elektronischen Bauelements wäre auch schon durch Halbierung der Schichtdicken allein möglich. Dann wäre das elektronische Bauteil beispielsweise lediglich durch das obere linke Viertel der Querschnittsdarstellung aus Figur 2 gebildet. Dieses hätte - durch die im Vergleich zu der Ausgestaltung aus Figur 1 - geringeren Schichtdicken oder durch weniger Material insgesamt jedoch eine geringere Wärmekapazität und würde sich, beispielsweise im Betrieb, schneller erwärmen. Um die veränderte Wärmekapazität zu kompensieren und trotzdem die Vorteile des geringeren Serienwiderstands der Innenelektroden nutzen zu können, ist der Querschnitt des Bauelements 10 in Figur 2 beispielsweise wieder an den aus Figur 1 angepasst.

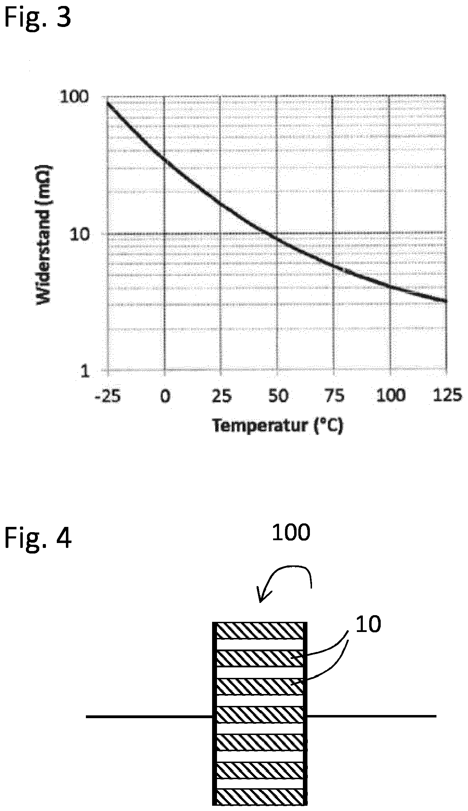

Figur 3 zeigt eine Widerstands-Temperaturkennlinie des elektronischen Bauelements gemäß Figur 2. Es ist insbesondere der elektrische Widerstand des Bauelements 10 über der Temperatur aufgetragen. Zu erkennen ist dabei das nichtlineare elektrische Verhalten. Bei einer Temperatur von 25°C beträgt der elektrische Widerstand, beispielsweise der elektrische Nennwiderstand circa 18 mΩ.

Figur 4 zeigt eine schematische Darstellung einer Anordnung 100 (Ersatzschaltbild), in der sieben elektronische Bauelemente, wie oben beschrieben, zu der Anordnung 100 parallel verschaltet sind. Die Parallelschaltung einzelner, beispielsweise schon in Vielschicht-Design ausgestalteter, elektronischer Bauelemente erlaubt vorteilhafterweise eine weitere Erhöhung der Strombelastbarkeit und/oder Stromtragfähigkeit, wie oben beschrieben.

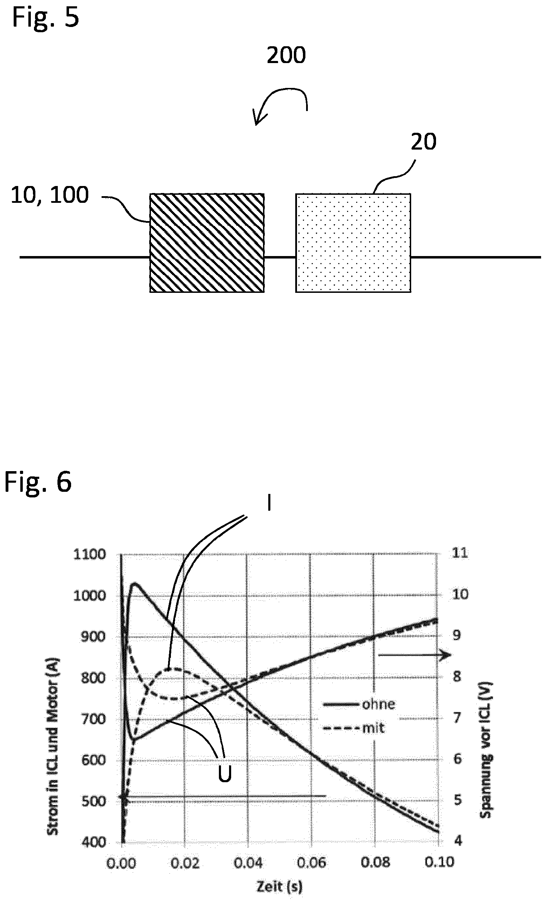

Figur 5 zeigt eine schematische Darstellung eines Systems 200, in dem das elektronische Bauelement 10 oder die Anordnung 100 in Reihe zu einer elektrischen Verbrauchereinrichtung 20 verschaltet und/oder angeordnet sind. In dem System 200 ist - bei einer gemeinsamen Umgebungstemperatur der Anordnung beziehungsweise des elektronischen Bauelement 10 und der Verbrauchereinrichtung 20 - die Erwärmungszeit, das heißt die Zeit, in der der Einschaltstrom der Verbrauchereinrichtung 20 das elektronische Bauelement 10 beziehungsweise die Anordnung 100 auf eine stationäre Temperatur erwärmt oder erwärmt hat, vorzugsweise auf die elektrische Anlaufzeit der Verbrauchereinrichtung 20 abgestimmt. Die elektrische Anlaufzeit bestimmt weiterhin, wann der Einschaltstrom der Verbrauchereinrichtung 20 auf den Nennstrom derselben abgefallen ist. Beispielsweise beträgt die Anlaufzeit circa 50 ms.

Alternativ kann im Rahmen des Systems und/oder im Rahmen eines Herstellungsverfahrens oder Abstimmungsverfahrens des oder für das System die genannte Anlaufzeit, umgekehrt, entsprechend auf die Erwärmungszeit abgestimmt sein oder werden.

Durch die genannte Abstimmung kann insbesondere der Betrieb des Systems 200 beispielsweise als Einschaltstrombegrenzung in Kraftfahrzeugen optimiert werden.

Die stationäre Temperatur kann beispielsweise einen Zustand beschreiben, in dem die dem Bauelement oder der Anordnung zugeführte elektrische Leistung über Wärmeleitung und/oder Wärmestrahlung derart an die Umgebung abgegeben wird, dass sich die Temperatur des Bauelements beziehungsweise der Anordnung nicht weiter erhöht.

Das System 200 kann entsprechend weiterhin eine elektrische Leistungsquelle (in den Figuren nicht explizit gekennzeichnet) umfassen, die zweckmäßigerweise ausgebildet ist, den genannten Einschaltstrom bereitzustellen.

In einer beispielhaften Ausgestaltung des Systems 200 sind die Erwärmungszeit und die elektrische Anlaufzeit gleich. In der erfindungsgemäßen Ausgestaltung des Systems 200 stehen die Erwärmungszeit und die elektrische Anlaufzeit in einem Verhältnis zwischen 0,5 und 1,5 zueinander.

Figur 6 zeigt das elektrische Einschaltverhalten der Verbrauchereinrichtung 20 mit und ohne Einschaltstrombegrenzung. Bei der Verbrauchereinrichtung 20 handelt es sich vorzugsweise um einen elektrischen Anlassermotor eines Kraftfahrzeugs. Insbesondere ist die Anordnung 100 beispielhaft gemäß Figur 4 (Parallelschaltung von sieben Bauelementen 10) in Reihe zu der Verbrauchereinrichtung 20 geschaltet (vgl. hierzu das System 200 aus Figur 5). In Figur 6 ist der elektrische Strom (I) über der Zeit aufgetragen (vgl. linke Ordinatenachse). Eine Zeit von 0 Sekunden entspricht dabei instantan dem Einschaltvorgang. Weiterhin ist auf der rechten Ordinatenachse die elektrische Spannung (U) über dem elektronischen Bauelement aufgetragen.

Die gestrichelten Linien beschreiben jeweils den Strombeziehungsweise Spannungsverlauf mit der in Reihe geschalteten Anordnung als Einschaltstrombegrenzer, wohingegen die durchgezogenen Linien den Strom- und Spannungsverlauf der Verbrauchereinrichtung entsprechend ohne die Anordnung, das heißt ohne Begrenzung des Einschaltstroms darstellen. Insbesondere ist zu erkennen, dass der Einschaltstrom (mit I gekennzeichnet) kurz nach dem Einschaltvorgang, also beispielsweise in den ersten 20 ms nach dem Einschaltvorgang, verglichen mit dem Fall der in Reihe geschalteten Anordnung als Einschaltstrombegrenzung, signifikant höher ist. Dementsprechend ist auch der Spannungsabfall oder die Spannung (mit U gekennzeichnet) kurz nach dem Einschaltvorgang, beispielsweise innerhalb der ersten 40 ms ohne Einschaltstrombegrenzung kleiner als mit Einschaltstrombegrenzung.

### Bezugszeichenliste

- 1: Erste Innenelektrode
- 2: Zweite Innenelektrode
- 3: Funktionsschicht
- 4: Freie Elektrode
- 10: Elektronisches Bauelement
- 11: Erster Außenkontakt
- 12: Zweiter Außenkontakt
- 20: Verbrauchereinrichtung

- 100: Anordnung
- 200: System

- I: Stromverlauf
- U: Spannungsverlauf

## Patentansprüche

1. System (200) mit einem elektronischen Bauelement (10),
- das elektronische Bauelement umfassend eine Vielzahl von übereinander zu einem Stapel angeordneten Funktionsschichten (3), erste Innenelektroden (1) und zweite Innenelektroden (2), wobei jede der ersten und zweiten Innenelektroden (2) zwischen zwei benachbarten Funktionsschichten (3) angeordnet ist, wobei die ersten Innenelektroden (1) mit einem ersten Außenkontakt (11) des elektronischen Bauelements (10) und die zweiten Innenelektroden (2) mit einem zweiten Außenkontakt (12) des elektronischen Bauelements (10) elektrisch leitfähig verbunden sind, wobei die Funktionsschichten (3) so gewählt sind, dass der erste und der zweite Außenkontakt (11, 12) sowohl in einem Grundzustand, das heißt einem unbelasteten Zustand, in dem keine elektrische Leistung an das elektronische Bauelement (10) bei einer Raumtemperatur angelegt ist, als auch in einem heißen Zustand des elektronischen Bauelements (10), das heißt bei einer Temperatur, welche größer ist als diejenige des elektronischen Bauelements (10) in dem Grundzustand, über die Funktionsschichten (3) elektrisch leitfähig miteinander verbunden sind, wobei der elektrische Nennwiderstand des elektronischen Bauelements (10) zwischen 10 mΩ und 25 mΩ beträgt, und wobei das elektronische Bauelement (10) ein NTC-Bauelement ist,
- das System ferner umfassend eine Verbrauchereinrichtung (20), welche elektrisch zu dem elektronischen Bauelement (10) in Reihe geschaltet ist und zusammen mit dem elektronischen Bauelement (10) einer Umgebungstemperatur ausgesetzt ist, wobei das System (200) derart ausgebildet ist, dass die Erwärmungszeit, das heißt die Zeit, in der der Einschaltstrom der Verbrauchereinrichtung (20) das elektronische Bauelement (10) auf eine stationäre Temperatur erwärmt, und die elektrische Anlaufzeit der Verbrauchereinrichtung (20), die bestimmt, wann der Einschaltstrom auf den Nennstrom der Verbrauchereinrichtung (20) abgefallen ist, in einem Verhältnis zwischen 0,5 und 1,5 zueinander stehen.

2. System (200), umfassend eine Parallelschaltung von mehreren elektronischen Bauelementen (10), die jeweils eine Vielzahl von übereinander zu einem Stapel angeordneten Funktionsschichten (3), erste Innenelektroden (1) und zweite Innenelektroden (2) umfassen, wobei jede der ersten und zweiten Innenelektroden (2) zwischen zwei benachbarten Funktionsschichten (3) angeordnet ist, wobei die ersten Innenelektroden (1) mit einem ersten Außenkontakt (11) des jeweiligen elektronischen Bauelements (10) und die zweiten Innenelektroden (2) mit einem zweiten Außenkontakt (12) des jeweiligen elektronischen Bauelements (10) elektrisch leitfähig verbunden sind, wobei die Funktionsschichten (3) so gewählt sind, dass der erste und der zweite Außenkontakt (11, 12) sowohl in einem Grundzustand, das heißt einem unbelasteten Zustand, in dem keine elektrische Leistung an das jeweilige elektronische Bauelement (10) bei einer Raumtemperatur angelegt ist, als auch in einem heißen Zustand des jeweiligen elektronischen Bauelements (10), das heißt bei einer Temperatur, welche größer ist als diejenige des jeweiligen elektronischen Bauelements (10) in dem Grundzustand, über die Funktionsschichten (3) elektrisch leitfähig miteinander verbunden sind, wobei der elektrische Nennwiderstand des elektronischen Bauelements (10) zwischen 10 mΩ und 25 mΩ beträgt, und wobei das jeweilige elektronische Bauelement (10) ein NTC-Bauelement ist, das System ferner umfassend eine Verbrauchereinrichtung (20), welche elektrisch zu der Parallelschaltung der elektronischen Bauelemente (10) in Reihe geschaltet ist und zusammen mit der Parallelschaltung der elektronischen Bauelemente (10) einer Umgebungstemperatur ausgesetzt ist, wobei das System (200) derart ausgebildet ist, dass die Erwärmungszeit, das heißt die Zeit, in der der Einschaltstrom der Verbrauchereinrichtung (20) die Parallelschaltung der elektronischen Bauelemente (10) auf eine stationäre Temperatur erwärmt, und die elektrische Anlaufzeit der Verbrauchereinrichtung (20), die bestimmt, wann der Einschaltstrom auf den Nennstrom der Verbrauchereinrichtung (20) abgefallen ist, in einem Verhältnis zwischen 0,5 und 1,5 zueinander stehen.

3. System (200) nach mindestens einem der vorhergehenden Ansprüche , wobei der spezifische elektrische Widerstand der Funktionsschichten (3) im Grundzustand des elektronischen Bauelements (10) zwischen 0,1 Ωm und 0,3 Ωm beträgt.

4. System (200) nach mindestens einem der vorhergehenden Ansprüche, wobei die Anzahl der Funktionsschichten (3) des elektronischen Bauelements (10) zwischen 20 und 120 beträgt.

5. System (200) nach mindestens einem der vorhergehenden Ansprüche, wobei die Funktionsschichten (3) ein dotiertes Halbleitermaterial, insbesondere ein Verbindungshalbleitermaterial, und/oder ein keramisches Material umfassen.

6. System (200) nach mindestens einem der vorhergehenden Ansprüche, wobei die Funktionsschichten (3) ein Oxid zumindest eines der Elemente Eisen, Kobalt, Nickel, Kupfer oder Zink umfassen.

7. System (200) nach mindestens einem der vorherigen Ansprüche, wobei die ersten und zweiten Innenelektroden (1, 2) in Stapelrichtung gesehen alternierend übereinander angeordnet sind.

8. System (200) nach mindestens einem der Ansprüche 1 bis 6, wobei das elektronische Bauelement (10) freie Elektroden (4) aufweist, welche elektrisch nur über die Funktionsschichten (3) mit den ersten und zweiten Innenelektroden (1, 2) verbunden sind.

9. System (200) nach Anspruch 8, wobei die ersten und zweiten Innenelektroden (1, 2), in Aufsicht auf das elektronische Bauelement (10) betrachtet, beabstandet sind.

10. System (200) nach Anspruch 8 oder 9, wobei die freien Elektroden (4) übereinander gestapelt angeordnet sind.

11. System (200) nach einem der vorherigen Ansprüche, wobei die Erwärmungszeit und die elektrische Anlaufzeit gleich sind.

## Claims

1. System (200) having an electronic component (10),
- the electronic component comprising a multiplicity of functional layers (3) which are arranged one on top of the other to form a stack, first internal electrodes (1) and second internal electrodes (2), wherein each of the first and second internal electrodes (2) is arranged between two adjacent functional layers (3), wherein the first internal electrodes (1) are connected in an electrically conductive fashion to a first external contact (11) of the electronic component (10), and the second internal electrodes (2) are connected in an electrically conductive fashion to a second external contact (12) of the electronic component (10), wherein the functional layers (3) are selected such that the first and second external contacts (11, 12) are connected to one another in an electrically conductive fashion via the functional layers (3) both in a basic state, that is to say an unloaded state in which no electrical power is applied to the electronic component (10) at room temperature, and in a hot state of the electronic component (10), that is to say at a temperature which is higher than that of the electronic component (10) in the basic state, wherein the nominal resistance of the electronic component (10) is between 10 mΩ and 25 mΩ, and wherein the electronic component (10) is an NTC component,
- the system also comprising a consumer device (20) which is connected electrically in series with the electronic component (10) and is subjected, together with the electronic component (10), to an ambient temperature, wherein the system (200) is embodied in such a way that the heating time, that is to say the time in which the switch-on current of the consumer device (20) heats the electronic component (10) to a steady-state temperature and the electronical start-time of the consumer device (20) which determines when the switch-on current has dropped to the nominal current of the consumer device (20) are in a ratio of between 0.5 and 1.5 to one another.

2. System (200), comprising a parallel circuit of a plurality of electronic components (10) which each comprise a multiplicity of functional layers (3) which are arranged one on top of the other to form a stack, first internal electrodes (1) and second internal electrodes (2), wherein each of the first and second internal electrodes (2) is arranged between two adjacent functional layers (3), wherein the first internal electrodes (1) are connected in an electrically conductive fashion to a first external contact (11) of the respective electronic component (10), and second internal electrodes (2) are connected in an electrically conductive fashion to a second external contact (12) of the respective electronic component (10), wherein the functional layers (3) are selected in such a way that the first and second external contacts (11, 12) are connected to one another in an electrically conductive fashion via the functional layers (3), both in a basic state, that is to say an unloaded state in which no electrical power is applied to the respective electronic component (10) at room temperature, and in a hot state of the respective electronic component (10), that is to say at a temperature which is higher than that of the respective electronic component (10) in the basic state, wherein the nominal resistance of the electronic component (10) is between 10 mΩ and 25 mΩ, and wherein the respective electronic component (10) is an NTC component, the system also comprising a consumer device (20) which is connected electrically in parallel with the parallel connection of the electronic components (10) and is subjected, together with the parallel connection of the electronic components (10), to an ambient temperature, wherein the system (200) is embodied in such a way that the heating time, that is to say the time in which the switch-on current of the consumer device (20) heats the parallel connection of the electronic components (10) to a steady-state temperature, and the electrical start-up time of the consumer device (20) which determines when the switch-on current has dropped to the nominal current of the consumer device (20), are in a ratio between 0.5 and 1.5 to one another.

3. System (200) according to at least one of the preceding claims, wherein the specific electrical resistance of the functional layers (3) in the basic state of the electronic component (10) is between 0.1 mΩ and 0.3 mΩ.

4. System (200) according to at least one of the preceding claims, wherein the number of the functional layers (3) of the electronic component (10) is between 20 and 120.

5. System (200) according to at least one of the preceding claims, wherein the functional layers (3) comprise a doped semiconductor material, in particular a connecting semiconductor material and/or a ceramic material.

6. System (200) according to at least one of the preceding claims, wherein the functional layers (3) comprise an oxide of at least one of the elements iron, cobalt, nickel, copper or zinc.

7. System (200) according to at least one of the preceding claims, wherein the first and second internal electrodes (1, 2) are arranged in an alternating fashion one on top of the other when viewed in a stacking direction.

8. System (200) according to at least one of Claims 1 to 6, wherein the electronic component (10) has free electrodes (4) which are electrically connected to the first and second internal electrodes (1, 2) only via the functional layers (3).

9. System (200) according to Claim 8, wherein the first and second internal electrodes (1, 2) are spaced apart when viewed in a plan view of the electronic component (10).

10. System (200) according to Claim 8 or 9, wherein the free electrodes (4) are stacked one on top of the other.

11. System (200) according to one of the preceding claims, wherein the heating time and the electrical start-up time are the same.

## Revendications

1. Système (200) comprenant un composant électronique (10),
- le composant électronique comprenant une pluralité de couches fonctionnelles (3) disposées les unes au-dessus des autres en une pile, des premières électrodes internes (1) et des deuxièmes électrodes internes (2), chacune des premières et des deuxièmes électrodes internes (2) étant disposée entre deux couches fonctionnelles (3) voisines, les premières électrodes internes (1) étant reliées de manière électriquement conductrice à un premier contact externe (11) du composant électronique (10) et les deuxièmes électrodes internes (2) à un deuxième contact externe (12) du composant électronique (10), les couches fonctionnelles (3) étant choisies de telle sorte que le premier et le deuxième contact externe (11, 12) sont reliés de manière électriquement conductrice l'un à l'autre par le biais des couches fonctionnelles (3) à la fois dans un état de base, c'est-à-dire un état non chargé dans lequel aucune puissance électrique n'est appliquée au composant électronique (10) à une température ambiante, et dans un état chaud du composant électronique (10), c'est-à-dire à une température qui est supérieure à celle du composant électronique (10) dans l'état de base, la résistance nominale électrique du composant électronique (10) étant comprise entre 10 mΩ et 25 mΩ et le composant électronique (10) étant un composant à CTN,
- le système comprenant en outre un dispositif récepteur (20) qui est branché électriquement en série avec le composant électronique (10) et qui, conjointement avec le composant électronique (10), est exposé à une température environnante, le système (200) étant configuré de telle sorte que le temps de réchauffage, c'est-à-dire le temps dans lequel le courant de mise en circuit du dispositif récepteur (20) réchauffe le composant électronique (10) à une température stationnaire, et le temps d'établissement électrique du dispositif récepteur (20), lequel détermine à quel moment le courant de mise en circuit a chuté au courant nominal du dispositif récepteur (20), se trouvent dans un rapport compris entre 0,5 et 1,5 l'un par rapport à l'autre.

2. Système (200) comprenant un circuit parallèle de plusieurs composants électroniques (10), lesquels comprennent respectivement une pluralité de couches fonctionnelles (3) disposées les unes au-dessus des autres en une pile, des premières électrodes internes (1) et des deuxièmes électrodes internes (2), chacune des premières et des deuxièmes électrodes internes (2) étant disposée entre deux couches fonctionnelles (3) voisines, les premières électrodes internes (1) étant reliées de manière électriquement conductrice à un premier contact externe (11) du composant électronique (10) respectif et les deuxièmes électrodes internes (2) à un deuxième contact externe (12) du composant électronique (10) respectif, les couches fonctionnelles (3) étant choisies de telle sorte que le premier et le deuxième contact externe (11, 12) sont reliés de manière électriquement conductrice l'un à l'autre par le biais des couches fonctionnelles (3) à la fois dans un état de base, c'est-à-dire un état non chargé dans lequel aucune puissance électrique n'est appliquée au composant électronique (10) respectif à une température ambiante, et dans un état chaud du composant électronique (10) respectif, c'est-à-dire à une température qui est supérieure à celle du composant électronique (10) respectif dans l'état de base, la résistance nominale électrique du composant électronique (10) étant comprise entre 10 mΩ et 25 mΩ et le composant électronique (10) respectif étant un composant à CTN, le système comprenant en outre un dispositif récepteur (20) qui est branché électriquement en série avec le circuit parallèle des composants électroniques (10) et qui, conjointement avec le circuit parallèle des composants électroniques (10), est exposé à une température environnante, le système (200) étant configuré de telle sorte que le temps de réchauffage, c'est-à-dire le temps dans lequel le courant de mise en circuit du dispositif récepteur (20) réchauffe le circuit parallèle des composants électroniques (10) à une température stationnaire, et le temps d'établissement électrique du dispositif récepteur (20), lequel détermine à quel moment le courant de mise en circuit a chuté au courant nominal du dispositif récepteur (20), se trouvent dans un rapport compris entre 0,5 et 1,5 l'un par rapport à l'autre.

3. Système (200) selon au moins l'une des revendications précédentes, la résistance électrique spécifique des couches fonctionnelles (3) à l'état de base du composant électronique (10) étant comprise entre 0,1 Ωm et 0,3 Ωm.

4. Système (200) selon au moins l'une des revendications précédentes, le nombre de couches fonctionnelles (3) du composant électronique (10) étant compris entre 20 et 120.

5. Système (200) selon au moins l'une des revendications précédentes, les couches fonctionnelles (3) comprenant un matériau semiconducteur dopé, notamment un matériau semiconducteur de liaison, et/ou un matériau céramique.

6. Système (200) selon au moins l'une des revendications précédentes, les couches fonctionnelles (3) comprenant un oxyde d'au moins l'un des éléments fer, cobalt, nickel, cuivre ou zinc.

7. Système (200) selon au moins l'une des revendications précédentes, les premières et deuxièmes électrodes internes (1, 2), vues dans le sens de la pile, étant disposées en alternance les unes au-dessus des autres.

8. Système (200) selon au moins l'une des revendications 1 à 6, le composant électronique (10) possédant des électrodes libres (4) qui sont reliées électriquement aux premières et deuxièmes électrodes internes (1, 2) uniquement par le biais des couches fonctionnelles (3).

9. Système (200) selon la revendication 8, les premières et deuxièmes électrodes internes (1, 2), en vue de dessus sur le composant électronique (10), étant espacées.

10. Système (200) selon la revendication 8 ou 9, les électrodes libres (4) étant disposées empilées les unes au-dessus des autres.

11. Système (200) selon l'une des revendications précédentes, le temps de réchauffage et le temps d'établissement électrique étant identiques.
